# EUROPEAN PATENT SPECIFICATION

(11) **EP 3 486 977 B1**
(45) Date of publication and mention of the grant of the patent: **09.09.2020**
(21) Application number: 18206184.6
(22) Date of filing: 14.11.2018
(51) Int. Cl.: H01M 4/36, H01M 4/485, H01M 4/505, H01M 4/525, H01M 10/0525

(54) **POSITIVE ELECTRODE FOR RECHARGEABLE LITHIUM BATTERY, RECHARGEABLE LITHIUM BATTERY INCLUDING SAME AND BATTERY MODULE**
POSITIVE ELEKTRODE FÜR WIEDERAUFLADBARE LITHIUM-BATTERIE, WIEDERAUFLADBARE LITHIUM-BATTERIE MIT DEM GLEICHEN UND BATTERIE-MODUL
ELECTRODE POSITIVE POUR BATTERIE AU LITHIUM RECHARGEABLE, BATTERIE AU LITHIUM RECHARGEABLE LE COMPRENANT ET MODULE D'ACCUMULATEUR

(30) Priority: 16.11.2017 KR 20170153158
(43) Date of publication of application: 22.05.2019
(73) Proprietor: Samsung SDI Co., Ltd., Gyeonggi-do 17084 (KR)
(72) Inventor: Chae, Youngjoo, 17084 Yongin-si, Gyeonggi-do (KR); Kim, Kitae, 17084 Yongin-si, Gyeonggi-do (KR); Kim, Young-Ki, 17084 Yongin-si, Gyeonggi-do (KR); Park, Jungjoon, 17084 Yongin-si, Gyeonggi-do (KR); Yu, Dong-Hwan, 17084 Yongin-si, Gyeonggi-do (KR); Lee, Soonrewl, 17084 Yongin-si, Gyeonggi-do (KR); Lee, Hyerim, 17084 Yongin-si, Gyeonggi-do (KR); Choi, Ickkyu, 17084 Yongin-si, Gyeonggi-do (KR); Hong, Soonkie, 17084 Yongin-si, Gyeonggi-do (KR); Lee, Kisoo, 17084 Yongin-si, Gyeonggi-do (KR)
(74) Representative: Gulde & Partner

(56) References cited:
- EP-A1- 3 226 331
- US-A1- 2012 015 250
- US-A1- 2014 099 545
- US-A1- 2015 147 655

## Description

### BACKGROUND OF THE INVENTION

### (a) Field of the Invention

A positive active material for a rechargeable lithium battery, and a rechargeable lithium battery and a battery module including the same are disclosed.

### (b) Description of the Related Art

A rechargeable lithium battery has recently drawn attention as a power source for small portable electronic devices.

Such a rechargeable lithium battery includes a positive electrode including a positive active material, a negative electrode including a negative active material, a separator disposed between the positive electrode and negative electrode, and an electrolyte.

The negative active material may include various carbon-based materials capable of intercalating/deintercalating lithium such as artificial graphite, natural graphite, hard carbon, and the like, or a Si-based active material.

The positive active material may include an oxide including lithium and a transition metal and having a structure capable of intercalating lithium ions such as LiCoO₂, LiMn₂O₄, LiNi₁₋ₓCoₓO₂ (0 < x < 1), LiNi_{1-x-y}CoₓA_{y}O₂ (0 < x + y < 1, and A is Mn or Al).

A rechargeable lithium battery including a conventional positive active material has a merit at a high temperature but small capacity. In addition, Ni-based and NCM-based (nickel-cobalt-manganese-based) lithium oxides in a high concentration tend to be used in order to accomplish the high capacity, but the Ni-based and NCM-based (nickel-cobalt-manganese-based) lithium oxides in a high concentration show deteriorated characteristics at a high temperature. Attempts of doping, applying a coating layer, or the like have been continuously made to adress the mentioned limitations, as described in the exemplary documents US 2015/147655 A1, EP 3226331 A1, US 2014/099545 A1 and US 2012/015250 A1.

### SUMMARY OF THE INVENTION

An embodiment provides a positive active material for a rechargeable lithium battery capable of improving output and high temperature cycle-life characteristics at room temperature and at a low temperature.

Another embodiment provides a rechargeable lithium battery including the positive active material.

Yet another embodiment provides a battery module including the rechargeable lithium battery.

An embodiment provides a positive active material for a rechargeable lithium battery as defined in claim 1 including a lithium nickel-manganese-cobalt composite oxide and a coating layer disposed on the surface of the composite oxide, wherein the coating layer includes Al and W.

The lithium nickel-manganese-cobalt composite oxide may include nickel in the largest amount of nickel, manganese, and cobalt.

The lithium nickel-manganese-cobalt composite oxide may be represented by Chemical Formula 1.

[Chemical Formula 1] Liₐ₁Niₓ₁Co_{y1}Mn_{z1}M_{w}O₂

In Chemical Formula 1, 0.9 ≤ a1 ≤ 1.25, 0.4 ≤ x1 ≤ 0.95, 0.1 ≤ y1 ≤0.3, 0.1 ≤ z1 ≤ 0.3, 0 ≤ w ≤ 0.3, x1 + y1 + z1 + w =1, and M is at least one metal selected from B, Li, Mg, Al, Ca, Sr, Cr, V, Ti, Fe, Co, Ni, Zr, Zn, Si, Y, Nb, Ga, Sn, Mo, W, and a combination thereof.

The composite oxide is coated with a lithium oxide including Al and W on its surface.

The lithium oxide may be represented by Chemical Formula 2.

[Chemical Formula 2] LiₐW_{b}Al_{c}O_{d}

In Chemical Formula 2, 0.5≤a≤2, 0≤b≤3, 0≤c≤4, and 1≤d≤6.

The lithium oxide may be a combination of (i) at least one of LiAlO₂, LiAl₂O₄, and Li₂AlO₃ and (ii) at least one of LiWO₃ and Li₂WO₃.

The lithium oxide may be disposed in an island shape on the surface of the composite oxide.

The positive active material may have an average particle diameter (D50) of 2 µm to 10 µm.

The positive active material may have a porous structure.

Another embodiment provides a rechargeable lithium battery including the positive electrode including a positive active material; a negative electrode including a negative active material, and an electrolyte.

Another embodiment provides a battery module including the rechargeable lithium battery as a unit battery.

Other embodiments of the present disclosure are included in the following detailed description.

The positive active material for a rechargeable lithium battery according to an embodiment may provide a rechargeable lithium battery having improved output characteristics at room temperature and at a low temperature, and improved high temperature cycle-life characteristics.

### BRIEF DESCRIPTION OF THE DRAWINGS

FIG. 1 is a schematic view showing a structure of a rechargeable lithium battery according to an embodiment.
FIG. 2 is a schematic view showing a surface of a positive active material according to an embodiment.
FIG. 3 is a graph showing an XPS analysis result of the positive active material according to Example 1.
FIG. 4 is a graph showing an XPS analysis result of the positive active material according to Comparative Example 1.
FIG. 5 is a graph showing low temperature outputs of the half cells including the positive active materials according to Example 1 and Comparative Example 1.
FIG. 6 is a graph showing high temperature cycle-life characteristics of the half cells including the positive active materials according to Example 1 and Comparative Example 1.

### DETAILED DESCRIPTION

Exemplary embodiments will hereinafter be described in the detailed description.

As used herein, when a definition is not otherwise provided, an average particle diameter (D50) indicates a particle diameter where an accumulated volume is about 50 volume% in a particle distribution and measured by PSA (particle size analyzer).

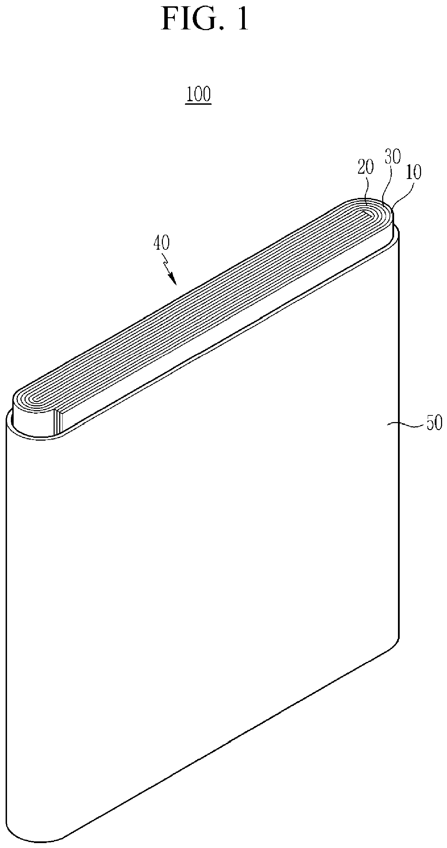

Hereinafter, referring to FIG. 1, a positive active material for a rechargeable lithium battery according to an embodiment is described. FIG. 1 is a schematic view showing a structure of a rechargeable lithium battery according to an embodiment.

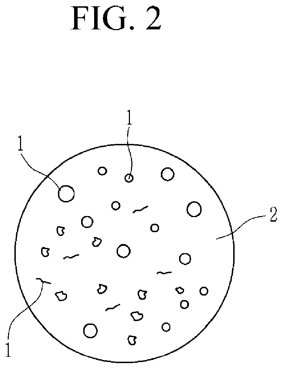

Referring to FIG.2, a positive active material for a rechargeable lithium battery according to an embodiment includes a lithium nickel-manganese-cobalt composite oxide 1 and a coating layer 2 disposed on the surface of the nickel-manganese-cobalt composite oxide 1. The coating layer 2 includes Al and W. FIG. 2 shows that the lithium nickel-manganese-cobalt composite oxide 1 and the coating layer 2 are formed to have a sphere-like shape, but the present disclosure is not limited thereto and may have various shapes. The composite oxide surface is coated with a lithium oxide including Al and W.

The lithium nickel-manganese-cobalt composite oxide may include nickel in the largest amount of nickel, manganese, and cobalt. In other words, the composite oxide includes more nickel that manganese or cobalt in atomic percent (at.%). For example, in Chemical Formula 1 below index a1 is greater than index y1, respectively index z1.

The composite oxide may be represented by Chemical Formula 1.

[Chemical Formula 1] Liₐ₁Niₓ₁Co_{y1}Mn_{z1}M_{w}O₂

In Chemical Formula 1, 0.9 ≤ a1 ≤ 1.25, 0.4 ≤ x1 ≤ 0.95, 0.1 ≤ y1 ≤0.3, 0.1 ≤ z1 ≤ 0.3, 0 ≤ w ≤ 0.3, x1 + y1 + z1 + w =1, and M is at least one metal selected from B, Li, Mg, Al, Ca, Sr, Cr, V, Ti, Fe, Co, Ni, Zr, Zn, Si, Y, Nb, Ga, Sn, Mo, W, and a combination thereof.

In Chemical Formula 1, M may be at least one metal selected from Zr, Ti, Al, Mg, and a combination thereof.

The composite oxide represented by Chemical Formula 1 has a high Ni content, and thus charge and discharge capacity, efficiency and cycle-life characteristics may be improved. Specifically, this effect may be effectively obtained in a positive active material including nickel in a large content (high Ni) and having a Ni mole ratio of x1 in a range of about 0.4 to about 0.95 as shown in Chemical Formula 1, that is, in an amount of about 30 mol% to about 95 mol%, specifically, about 50 mol% to about 90 mol%, and more specifically, about 60 mol% to about 80 mol% based on 100 mol% of a lithium nickel-manganese-cobalt composite oxide.

The lithium nickel-manganese-cobalt composite oxide with a (partial) coating on its surface consisting of a lithium oxide containing aluminum (Al) and Wolfram (W) has improved output characteristics at room temperature and at a low temperature and, in addition, the high temperature cycle-life characteristics as well as high efficiency (high capacity) is also improved compared with to a composite oxide without such coating.

The lithium oxide may be represented by Chemical Formula 2.

[Chemical Formula 2] LiₐW_{b}Al_{c}O_{d}

In Chemical Formula 2, 0.5≤a≤2, 0≤b≤3, 0≤c≤4, and 1≤d≤6.

For example, in Chemical Formula 2, 0.7≤a≤2, 1≤b≤2, 1≤c≤2, and 1≤d≤4.

For example, the lithium oxide may be a combination of (i) at least one of LiAlO₂, LiAl₂O₄, and Li₂AlO₃ and (ii) at least one of LiWO₃ and Li₂WO₃. Most preferred, the lithium oxide is LiAlWO₄.

The lithium oxide may be disposed in an island shape on the surface of the composite oxide. The lithium oxide may be uniformly dispersed on the entire surface of the composite oxide rather than the island form, but the island form has smaller sheet resistance and thus may improve battery performance. The term "island shape" refers to a coating consisting of a plurality of discontiguous areas spread over the outer surface of the composite oxide particle. These areas may cover for example 1 to 30%, in particular 1 - 15 % of the total outer surface of the composite oxide particle.

An average particle diameter (D50) of the positive active material may be 2 µm to 10 µm, for example 2 µm to 7 µm, or more specifically 2 µm to 5 µm. When the positive active material has an average particle diameter (D50) within the range, active mass density may be improved.

The positive active material may have a porous structure. For example, the positive active material may be a porous compound, i.e. these particles internally include a plurality of pores. The pore size and porosity are not particularly limited, and when the positive active material is a porous compound, capacity, and efficiency may be increased.

A method of manufacturing the positive active material for a rechargeable lithium battery according to an embodiment includes the following processes:
(a) mixing a nickel compound, a manganese compound, and a cobalt compound uniformly to produce a mixture;
(b) adding a lithium compound to the mixture and heat-treating the same to obtain a layered lithium nickel-manganese-cobalt composite oxide; and
(c) forming a coating layer including Al and W on the surface of the layered lithium nickel-manganese-cobalt composite oxide to obtain a lithium nickel-manganese-cobalt positive active material.

Examples of the nickel compound may be Ni(OH)₂, NiO, NiOOH, NiCO₃·2Ni(OH)₂·4H₂O, NiC₂O₄·2H₂O, Ni(NO₃)₂·6H₂O, NiSO₄, NiSO₄·6H₂O, a nickel salt of fatty acid, a nickel halide. Among them, Ni(OH)₂, NiO, NiOOH, NiCO₃·2Ni(OH)₂·4H₂O, and NiC₂O₄·2H₂O which include neither a nitrogen atom nor a sulfur atom may be used in order not to generate a harmful material such as NOₓ, SOₓ, and the like during the firing process. These nickel compounds may be used alone or as a mixture of two or more.

Examples of the manganese compound may include a manganese oxide such as Mn₂O₃, MnO₂ and Mn₃O₄, and the like, a manganese salt such as MnCO₃, Mn(NO₃)₂, MnSO₄, manganese acetate, manganese dicarboxylate, manganese citrate, and a manganese salt of fatty acid, oxy hydroxide, and a halide such as manganese chloride. Among these compounds, MnO₂, Mn₂O₃, and Mn₃O₄ do not generate gas such as NOₓ, SOₓ, and CO₂ during the firing process and may be commercially available inexpensively as an industrial material. These manganese compounds may be used alone or as a mixture of two or more.

Examples of the cobalt compound may include Co(OH)₂, CoOOH, CoO, Co₂O₃, Co₃O₄, Co(OCOCH₃)₂·4H₂O, CoCl₂, Co(NO₃)₂·6H₂O, and Co(SO₄)₂·7H₂O. Among these compounds, Co(OH)₂, CoOOH, CoO, Co₂O₃, and Co₃O₄ which do not generate a harmful material such as NOₓ, SOₓ, and the like during the firing process may be recommended. Co(OH)₂ and CoOOH are industrially inexpensive and have high reactivity and thus may be highly recommended. These cobalt compounds may be used alone or as a mixture of two or more.

A method of mixing the raw materials is not particularly limited but may include a wet or dry process. For example, the method may use a ball mill, a vibration mill, a bead mill, and the like. The wet mixing may obtain a more uniform mixture and increase reactivity of the mixture during the firing process.

The mixing time may vary depending on the mixing method. However, any mixing time may be applied, as long as the raw materials are uniformly mixed into a particle level. For example, the ball mill (wet or dry mixing) may be used for about 1 hour to about 2 days, the bead mill (wet continuous mixing) may be used for about 0.1 hour to about 6 hours for mixing and staying.

After the wet grinding, particles are dried in a generally-used method. The drying method is not particularly limited. However, a spay-drying method may be used in terms of particle uniformity, powder fluidity and powder-treatment performance, and efficient formation of spherical secondary particles.

Powders obtained from the spray-drying method may be sufficiently mixed with a lithium compound such as Li₂CO₃, LiNO₃, LiNO₂, LiOH, LiOH·H₂O, LiH, LiF, LiCI, LiBr, Lil, CH₃OOLi, Li₂O, Li₂SO₄, a lithium dicarboxylate salt, lithium citrate, a lithium salt of fatty acid, and alkyl lithium. Herein, a mole ratio of Li: (Ni + Co + Mn) may be greater than about 1:1. Specifically, the mole ratio may be in a range of about 1.01:1 to about 1.06:1 and more specifically, in a range of about 1.02:1 to about 1.05:1.

The layer-phased lithium nickel-manganese-cobalt composite oxide may be prepared by adding a doping material along with the lithium compound to the uniform mixture of the nickel compound, the manganese compound, and the cobalt compound. The doping material may use a compound including Ba, Mg, Al, Fe, Ti, W, B, Zr, or a combination thereof and specifically, Al, Zr, or a combination thereof.

This obtained powder mixture is primarily fired (heat-treated). This primary firing is performed under a condition determined depending on a composition and a lithium compound raw material used therein. The primary firing is performed at greater than or equal to about 700 °C and in addition, less than or equal to about 1100 °C, specifically, less than or equal to about 1075 °C, and more specifically, less than or equal to about 1050 °C. The primary firing may be completed by maintaining the temperature condition for a predetermined time and then, decreasing the temperature down to about 10 °C to about 40 °C at a predetermined rate.

Subsequently, a coating layer including Al and W on the surface of the lithium nickel-manganese-cobalt composite oxide is formed to obtain a positive active material. Herein, the coating may be performed using a solid-phase reaction method of mixing an Al- and W-containing compound and a lithium nickel-manganese-cobalt composite oxide and then, reacting them at an appropriate temperature, a spray-drying method of dissolving the Al- and W-containing compound in a solvent and then, dispersing/spraying the solution in the lithium nickel-manganese-cobalt composite oxide, a gas-phase reaction method, or the like. Preferably, a molar ratio of W to Al is in the range of 0.8 : 1 to 1 : 0.8, more preferred molar ratio of W to Al is in the range of 0.9 : 1 to 1 : 0.9, most preferred Al and W are present in equimolar amounts.

Specifically, after mixing the Al- and W-containing compound with the lithium nickel-manganese-cobalt positive active material, the mixture is secondarily fired (heat-treated) to obtain a positive active material according to an embodiment. The secondary firing may be performed at greater than or equal to about 600 °C and in addition, less than or equal to about 1000 °C, specifically, less than or equal to about 975 °C, and more specifically, less than or equal to about 950 °C. The secondary firing may be completed by maintaining the temperature condition for predetermined time and then, decreasing the temperature at a predetermined rate from about 10 °C to about 40 °C to obtain a positive active material according to an embodiment.

Another embodiment provides a rechargeable lithium battery including the positive electrode including the positive active material; a negative electrode; and an electrolyte.

The positive electrode includes a current collector and a positive active material layer disposed on the current collector and including a positive active material.

In the positive active material layer, an amount of the positive active material may be about 90 wt% to about 98 wt% based on the total weight of the positive active material layer. In addition, the positive active material layer may further include a binder and a conductive material. The binder and the conductive material may be included in an amount of about 1 wt% to about 5 wt%, respectively based on the total amount of the positive active material layer.

The binder may include polyvinyl alcohol, carboxylmethyl cellulose, hydroxypropyl cellulose, diacetyl cellulose, polyvinylchloride, polyvinylfluoride, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, or nylon.

The conductive material may include a carbon-based material such as natural graphite, artificial graphite, carbon black, acetylene black, ketjen black, or a carbon fiber; a metal-based material of a metal powder or a metal fiber including copper, nickel, aluminum, or silver; a conductive polymer such as a polyphenylene derivative; or a mixture thereof.

The current collector may include an aluminum foil, a nickel foil, or a combination thereof.

The negative electrode includes a current collector and a negative active material layer including a negative active material disposed on the current collector.

The negative active material includes a material that reversibly intercalates/deintercalates lithium ions, a lithium metal, a lithium metal alloy, a material being capable of doping/dedoping lithium, or transition metal oxide.

The material that reversibly intercalates/deintercalates lithium ions includes carbon materials. The carbon material may be any generally-used carbon-based negative active material in a lithium ion secondary battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon, a mesophase pitch carbonized product, or fired coke.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is selected from an alkali metal, an alkaline-earth metal, a Group 13 element, a Group 14 element, a Group 15 element, a Group 16 element, a transition metal, a rare earth element, and a combination thereof, and not Sn), and the like. At least one of them may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be a vanadium oxide, a lithium vanadium oxide, or a lithium titanium oxide.

In the negative active material layer, the negative active material may be included in an amount of about 95 wt% to about 99 wt% based on the total weight of the negative active material layer.

In an embodiment, the negative active material layer may include a binder, and optionally a conductive material. In the negative active material layer, the amount of the binder may be about 1 wt% to about 5 wt% based on the total weight of the negative active material layer. When it further includes the conductive material, it may include about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may include a styrene-butadiene rubber, an acrylated styrene-butadiene rubber (SBR), an acrylonitrile-butadiene rubber, an acrylic rubber, a butyl rubber, a fluorine rubber, an ethylene propylene copolymer, polyepichlorohydrine, polyphosphazene, polyacrylonitrile, polystyrene, an ethylene propylenediene copolymer, polyvinylpyridine, chlorosulfonated polyethylene, a latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metals may be Na, K, or Li. The thickener may be included in an amount of about 0.1 to about 3 parts by weight based on 100 parts by weight of the negative active material.

The conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), methyl acetate, ethyl acetate, n-propyl acetate, dimethylacetate, methylpropionate, ethylpropionate, decanolide, mevalonolactone, caprolactone, dibutyl ether, tetraglyme, diglyme, dimethoxyethane, 2-methyltetrahydrofuran, tetrahydrofuran, cyclohexanone, ethanol, isopropyl alcohol, nitriles such as R-CN (wherein R is a C2 to C20 linear, branched, or cyclic hydrocarbon group, a double bond, an aromatic ring, or an ether bond), amides such as dimethyl formamide, dioxolanes such as 1,3-dioxolane, and sulfolanes.

The non-aqueous organic solvent may be used alone or in a mixture. When the organic solvent is used in a mixture, their mixing ratio may be controlled in accordance with a desirable battery performance.

In addition, the organic solvent may further include an aromatic hydrocarbon-based organic solvent. Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4 trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound as an additive for improving cycle life.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle life may be flexibly used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, for example an integer ranging from 1 to 20), LiCI, Lil, and LiB(C₂O₄)₂ (lithium bis(oxalato) borate: LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the rechargeable lithium battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

In addition, according to another embodiment, the rechargeable lithium battery may not only be used as a battery cell used as a power source for a small device but also as a unit battery cell for a medium or large battery module including a plurality of battery cells.

In addition, according to an embodiment, a battery pack including the battery module as a power of a medium or large device is provided. The medium or large device may be an electric vehicle such as an electric vehicle (EV), a hybrid electric vehicle (HEV), a plug-in hybrid electric vehicle (PHEV) and a power storage device.

Hereinafter, examples of the present disclosure and comparative examples are described.

### (Example 1)

Lithium carbonate (Li₂CO₃) and Ni_{0.60}Co_{0.20}Mn_{0.20}(OH)₂ were mixed so that a mole ratio of Li : (Ni + Co + Mn) might be 1.03 : 1 to prepare a first mixture.

The first mixture was heated up to 850 °C at 5/min, allowed to stand at 850 °C for 5 hours, and then, cooled down to 25 °C at 5/min to prepare a compound represented by Li_{1.03}Ni_{0.60}Co_{0.20}Mn_{0.20}O₂. The primary heat treatment was performed at a charge height of 5 cm under an air atmosphere.

The compound represented by Li_{1.03}Ni_{0.60}Co_{0.20}Mn_{0.20}O₂ was mixed with WO₃ and Al₂O₃ to prepare a mixture.

The mixture was heated up to 750 °C at 5/min, allowed to stand at 750 °C for 5 hours, and cooled down to 25 °C at 5/min. This secondary heat treatment was performed under an O₂ atmosphere.

Through this secondary heat treatment, the compound represented by Li_{1.03}Ni_{0.60}Co_{0.20}Mn_{0.20}O₂ was coated with LiAlWO₄ to prepare a positive active material.

Herein, an average particle diameter (D50) of the positive active material was 4 µm.

### (Comparative Example 1)

A positive active material was prepared according to the same method as Example 1 except for not using WO₃ (using only Al₂O₃).

### Evaluation 1

Each atom concentration distribution of the positive active materials according to Example 1 and Comparative Example 1 was obtained from the surface by XPS (X-ray Photoelectron Spectroscopy) after sputtering argon thereon. The sputtering was performed by using argon ions at a sputtering rate of 0.5 nm/min (SiO₂ conversion).

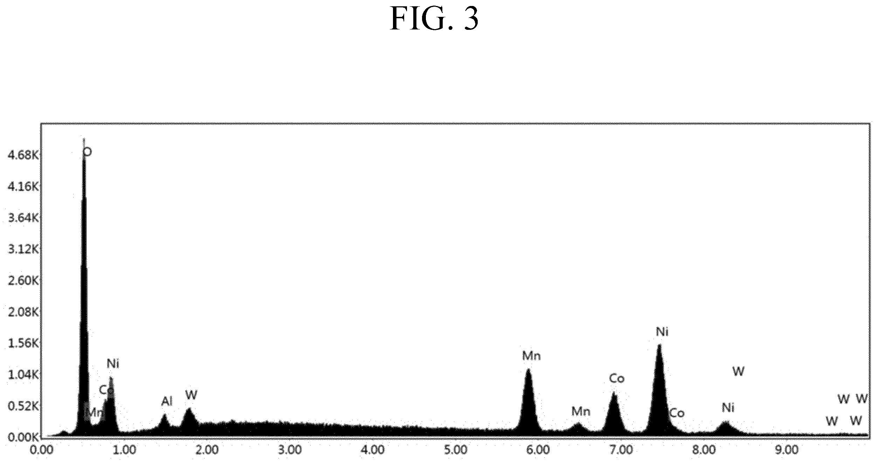

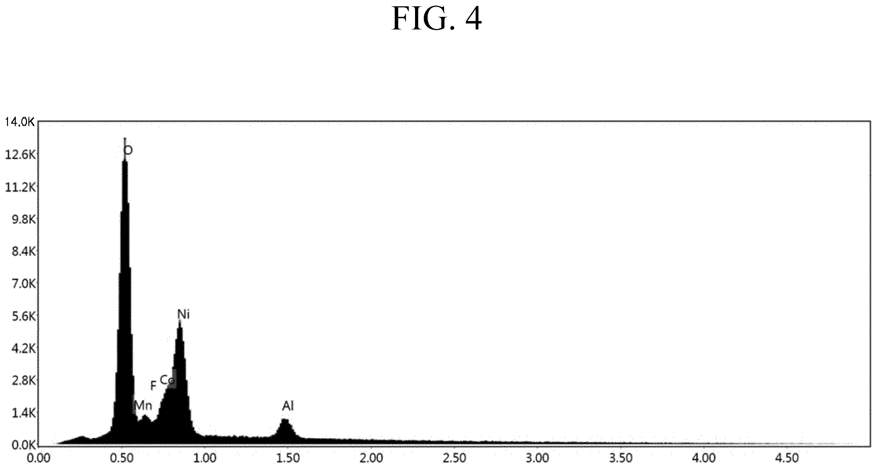

The result of Example 1 is shown in FIG. 3, and the result of Comparative Example 1 is shown in FIG. 4.

As shown in FIGS. 3 and 4, Al and W were all detected on the surface of the positive active material according to Example 1, but only Al was detected on the surface of the positive active material according to Comparative Example 1.

### Evaluation 2

As a result of examining each SEM photograph of the surface and cross section of the positive active materials according to Example 1 and Comparative Example 1, lithium oxide including Al and W was present in an island shape on the surface of the positive active material of Example 1, but lithium oxide including only Al was uniformly spread on the surface of the positive active material according to Comparative Example 1.

### Evaluation 3

94 wt% of the positive active material according to Example 1 and the Comparative Example 1, 3 wt% of ketjen black, and 3 wt% of polyvinylidene fluoride were mixed in an N-methyl pyrrolidone solvent to prepare positive active material slurry.

The positive active material slurry was coated on an Al foil, and dried and compressed to manufacture a positive electrode.

The positive electrode, a lithium metal counter electrode, and an electrolyte were used to manufacture a 2032 type half-cell according to a general method. The electrolyte was prepared by dissolving 1.0 M LiPF₆ in a mixed solvent of ethylene carbonate and dimethyl carbonate (50 : 50 volume ratio).

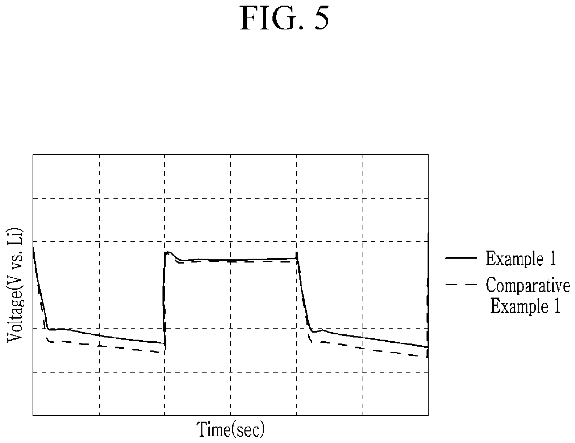

The half-cells were once charged and discharged at 0.2 C to evaluate charge capacity, discharge capacity, and charge and discharge efficiency at -10 °C, and the results are shown in FIG. 5.

As shown in FIG. 5, the half cell using the positive active material of Example 1 showed an excellent low temperature output compared with that using the positive active material of Comparative Example 1.

### Evaluation 4

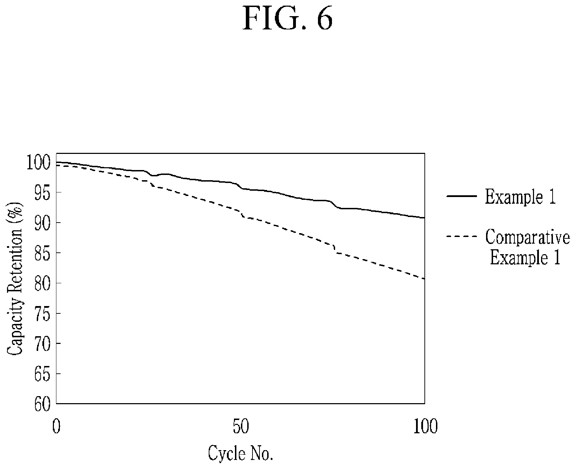

The half-cells were 100 times repetitively charged at a constant current/a constant voltage and 1.0 C (1 C=160 mAh/g) under a cut-off condition of 4.3 V and 0.05 CmA at a high temperature of 45 °C and discharged at a constant current and 1.0 C under a cut-off condition of 3.0 V to measure discharge capacity. A discharge capacity ratio of discharge capacity at each cycle relative to discharge capacity at the first cycle was obtained, and the results are shown in FIG. 6.

As shown in FIG. 6, the half-cell using the positive active material according to Example 1 showed very excellent discharge capacity retention at a high temperature compared with that using the positive active material according to Comparative Example 1.

### <Description of Symbols>

1: lithium oxide including Al and W
2: lithium nickel-manganese-cobalt composite oxide
10: positive electrode
20: negative electrode
30: separator
40: electrode assembly
50: case
100: rechargeable lithium battery

## Claims

1. A positive active material for a rechargeable lithium battery (100), comprising
a lithium nickel-manganese-cobalt composite oxide, and
a coating layer disposed on the surface of the composite oxide
**characterized in that** the composite oxide is coated with a lithium oxide comprising Al and W on its surface.

2. The positive active material of claim 1, wherein the lithium nickel-manganese-cobalt composite oxide comprises nickel in the largest amount of nickel, manganese, and cobalt.

3. The positive active material of claim 1, wherein the lithium nickel-manganese-cobalt composite oxide is represented by Chemical Formula 1:
[Chemical Formula 1] Liₐ₁Niₓ₁Co_{y1}Mn_{z1}M_{w}O₂
wherein, in Chemical Formula 1, 0.9 ≤ a1 ≤ 1.25, 0.4 ≤ x1 ≤ 0.95, 0.1 ≤ y1 ≤0.3, 0.1 ≤ z1 ≤ 0.3, 0 ≤ w ≤ 0.3, x1 + y1 + z1 + w =1, and M is at least one metal selected from B, Li, Mg, Al, Ca, Sr, Cr, V, Ti, Fe, Co, Ni, Zr, Zn, Si, Y, Nb, Ga, Sn, Mo, W, and a combination thereof.

4. The positive active material of claim 1-3, wherein the lithium oxide is represented by Chemical Formula 2:
[Chemical Formula 2] LiₐW_{b}Al_{c}O_{d}
wherein, in Chemical Formula 2, 0.5≤a≤2, 0≤b≤3, 0≤c≤4, and 1≤d≤6.

5. The positive active material for a rechargeable lithium battery of claim 1, wherein the lithium oxide is (a) a combination of (i) at least one of LiAlO₂, LiAl₂O₄, and Li₂AlO₃ and (ii) at least one of LiWO₃ and Li₂WO₃; or (b) LiAlWO₄.

6. The positive active material of claim 1, wherein the coating layer is disposed in an island shape on the surface of the composite oxide.

7. The positive active material of claim 1, wherein the positive active material has an average particle diameter (D50) of 2 µm to 10 µm.

8. The positive active material of claim 1, wherein the positive active material has a porous structure.

9. A rechargeable lithium battery (100), comprising
a positive electrode (10) comprising the positive active material of any one of claims 1 to 8;
a negative electrode (20) comprising a negative active material; and
an electrolyte.

10. A battery module comprising a rechargeable lithium battery of claim 9 as a unit battery.

## Patentansprüche

1. Positives Aktivmaterial für eine wiederaufladbare Lithiumbatterie (100), die ein Lithium-Nickel/Mangan/Cobalt-Mischoxid und eine Beschichtungsschicht, die auf der Oberfläche des Mischoxids angeordnet ist, umfasst,
**dadurch gekennzeichnet, dass** das Mischoxid auf seiner Oberfläche mit einem Lithiumoxid beschichtet ist, das Al und W umfasst.

2. Positives Aktivmaterial nach Anspruch 1, wobei das Lithium-Nickel/Mangan/Cobalt-Mischoxid Nickel in der größten Menge von Nickel, Mangan und Cobalt umfasst.

3. Positives Aktivmaterial nach Anspruch 1, wobei das Lithium-Nickel/Mangan/Cobalt-Mischoxid durch die chemische Formel 1 dargestellt wird:
[Chemische Formel 1] Liₐ₁Niₓ₁Co_{y1}Mn_{z1}M_{w}O₂
wobei in der chemischen Formel 1, 0,9 ≤ a1 ≤ 1,25, 0,4 ≤ x1 ≤ 0,95, 0,1 ≤ y1 ≤ 0,3, 0,1 ≤ z1 ≤ 0,3, 0 ≤ w ≤ 0,3, x1 + y1 + z1 + w = 1 und M wenigstens ein Metall, ausgewählt aus B, Li, Mg, Al, Ca, Sr, Cr, V, Ti, Fe, Co, Ni, Zr, Zn, Si, Y, Nb, Ga, Sn, Mo, W und einer Kombination daraus, ist.

4. Positives Aktivmaterial nach Anspruch 1 - 3, wobei das Lithiumoxid durch die chemische Formel 2 dargestellt wird:
[Chemische Formel 2] LiₐW_{b}Al_{c}O_{d}
wobei in der chemischen Formel 2 0,5 ≤ a ≤ 2, 0 ≤ b ≤ 3, 0 ≤ c ≤ 4 und 1 ≤ d ≤ 6.

5. Positives Aktivmaterial für eine wiederaufladbare Lithiumbatterie nach Anspruch 1, wobei das Lithiumoxid (a) eine Kombination aus (i) wenigstens einem aus LiAlO₂, LiAl₂O₄ und Li₂AlO₃ und (ii) wenigstens einem aus LiWO₃ und Li₂WO₃; oder (b) LiAlWO₄ ist.

6. Positives Aktivmaterial nach Anspruch 1, wobei die Beschichtungsschicht in einer Inselform auf der Oberfläche des Mischoxids angeordnet ist.

7. Positives Aktivmaterial nach Anspruch 1, wobei das positive Aktivmaterial einen mittleren Partikeldurchmesser (D50) von 2 µm bis 10 µm aufweist.

8. Positives Aktivmaterial nach Anspruch 1, wobei das positive Aktivmaterial eine poröse Struktur aufweist.

9. Wiederaufladbare Lithiumbatterie (100), umfassend:
eine positive Elektrode (10), die das positive Aktivmaterial nach einem der Ansprüche 1 bis 8 umfasst;
eine negative Elektrode (20), die ein negatives Aktivmaterial umfasst; und
einen Elektrolyten.

10. Batteriemodul, das eine wiederaufladbare Lithiumbatterie nach Anspruch 9 als eine Einheitsbatterie umfasst.

## Revendications

1. Matériau actif positif pour une batterie rechargeable au lithium (100), comprenant :
un oxyde composite de lithium et nickel-manganèse-cobalt, et
une couche de revêtement disposée sur la surface de l'oxyde composite,
**caractérisé en ce que** l'oxyde composite est revêtu d'un oxyde de lithium comprenant Al et W sur sa surface.

2. Matériau actif positif selon la revendication 1, dans lequel l'oxyde composite de lithium et nickel-manganèse-cobalt comprend du nickel en la plus forte proportion parmi le nickel, le manganèse et le cobalt.

3. Matériau actif positif selon la revendication 1, dans lequel l'oxyde composite de lithium et nickel-manganèse-cobalt est représenté par la formule chimique 1 :
[formule chimique 1] Liₐ₁Niₓ₁Co_{y1}Mn_{z1}M_{w}O₂
où, dans la formule chimique 1, 0,9 ≤ a1 ≤ 1,25, 0,4 ≤ x1 ≤ 0,95, 0,1 ≤ y1 ≤ 0,3, 0,1 ≤ z1 ≤ 0,3, 0 ≤ w ≤ 0,3, x1 + y1 + z1 + w = 1, et M est au moins un métal choisi parmi B, Li, Mg, Al, Ca, Sr, Cr, V, Ti, Fe, Co, Ni, Zr, Zn, Si, Y, Nb, Ga, Sn, Mo, W et une de leurs combinaisons.

4. Matériau actif positif selon les revendications 1 à 3, dans lequel l'oxyde de lithium est représenté par la formule chimique 2 :
[formule chimique 2] LiₐW_{b}Al_{c}O_{d}
où, dans la formule chimique 2, 0,5 ≤ a ≤ 2, 0 ≤ b ≤ 3, 0 ≤ c ≤ 4, et 1 ≤ d ≤ 6.

5. Matériau actif positif pour une batterie rechargeable au lithium selon la revendication 1, dans lequel l'oxyde de lithium est (a) une combinaison de (i) au moins l'un parmi LiAlO₂, LiAl₂O₄, et Li₂AlO₃ et (ii) au moins l'un parmi LiWO₃ et Li₂WO₃ ; ou (b) LiAlWO₄.

6. Matériau actif positif selon la revendication 1, dans lequel la couche de revêtement est disposée sous forme d'îlots sur la surface de l'oxyde composite.

7. Matériau actif positif selon la revendication 1, où le matériau actif positif a une granulométrie moyenne (D50) de 2 µm à 10 µm.

8. Matériau actif positif selon la revendication 1, où le matériau actif positif a une structure poreuse.

9. Batterie rechargeable au lithium (100) comprenant :
une électrode positive (10) comprenant le matériau actif positif de l'une quelconque des revendications 1 à 8 ;
une électrode négative (20) comprenant un matériau actif négatif ; et
un électrolyte.

10. Module de batteries comprenant une batterie rechargeable au lithium de la revendication 9 en tant que batterie unitaire.
